# EUROPEAN PATENT SPECIFICATION

(11) **EP 0 757 495 B1**
(45) Date of publication and mention of the grant of the patent: **02.01.2002**
(21) Application number: 96401732.1
(22) Date of filing: 05.08.1996
(51) Int. Cl.: H04N 7/62

(54) **Generator of clock signals for the synchronization of a system for processing digital data packets**
Taktsignalgenerator zur Synchronisation eines Systems zur Verarbeitung digitaler Datenpakete
Générateur d'horloge pour la synchronisation d'un système de traitement de données présentées sous forme de paquets

(30) Priority: 04.08.1995 FR 9509545
(43) Date of publication of application: 05.02.1997
(73) Proprietor: TEXAS INSTRUMENTS FRANCE, 06270 Villeneuve Loubet (FR); TEXAS INSTRUMENTS INCORPORATED, Dallas, Texas 75243 (US)
(72) Inventor: Chauvel, Gérard, 06600 Antibes (FR)
(74) Representative: Moncheny, Michel

(56) References cited:
- EP-A- 0 624 983
- WO-A-95/19670
- US-A- 5 473 385
- FERNSEH UND KINOTECHNIK, vol. 48, no. 10, October 1994, BERLIN DE, pages 545-553, XP000468290 RIEMANN: "Der MPEG-2-Standard"
- IEE COLLOQUIUM ON 'MPEG-2 - WHAT IT IS AND WHAT IT ISN'T', 24 January 1995, LONDON, GB, pages 4/1-4/13, XP000560804 SARGINSON: "MPEG-2: A Tutorial Introduction to the Systems Layer"

## Description

The present invention relates to a generator of clock signals for the synchronization of a system for processing digital data packets, in particular suitable for synchronizing a digital television signal receiver apparatus with a transmitter set.

In general, digital television signals are decoded in a decoder of a reception apparatus, by selecting audio and video data packets from the incident signals and decoding these packets so as to form audio and video data streams, respectively.

The audio data streams are decoded using an audio decoder in order to form an analog acoustic signal.

Similarly, the video data streams are used to form an image of both the chrominance and luminance signals.

Digital television signals are currently transmitted using the format of a standard referred to as MPEG, which fixes the frequency of the transmitter apparatus at 27 MHz.

In order to obtain correct synchronization between the image and the sound, it is necessary to synchronize the reception apparatus with the transmitter apparatus.

According to the MPEG standard, in particular under the MPEG2 format, data packets in the television signal are used for transmitting very precise and very reliable clock reference values, allowing the reception apparatus to generate a clock signal with a view to synchronized processing of the audio and video signals.

Currently, reception apparatuses which can extract a program clock reference value from a data packet and can synthesize such a synchronization clock signal from this value fully decode all of the packet and consequently require relatively complex decoding means and high-capacity storage means. Such an apparatus is described in WO-A-95 19670.

Furthermore, the clock signal generators fulfilling this function are currently implemented in hardware form and are therefore specific to one format.

The object of the invention is to overcome these drawbacks.

The subject of the invention is therefore a generator of clock signals for the synchronization of a system for processing digital data packets, each comprising a useful signal and a header signal containing information relating to the contents of the useful signal, in a transmitter apparatus, on the basis of program clock reference values each transmitted by one of the said packets, comprising counting means which are suitable for storing a program clock reference value and are incremented under the control of a voltage-controlled oscillator, and means for storing the contents of the counting means, characterized in that it includes hardware means for decoding the header signal of each packet and which are suitable for extracting from this header signal a characteristic indicating the presence, in the useful signal of the corresponding packet, of an adaptation field comprising bits for the coding of the program clock reference value, so as to cause the transfer of the contents of the counting means into the storage means and a central processing unit providing for the decoding of the useful signal of each packet so as to decode the said program clock reference value and making a correction to the value held in the storage means as a function of the number of transitions of the voltage-controlled oscillator between the position of the said characteristic indicating the presence of an adaptation field and the position of the said program clock reference value in the useful signal, the said central processing unit furthermore providing for the calculation of the said control voltage driving the said voltage-controlled oscillator so as to produce the said synchronization signals.

The generator furthermore includes software means for decoding the useful signal of each packet so as to extract therefrom a field indicating the presence of a clock reference value in this useful signal and an initialization control field, the said central processing unit causing the storage of the program clock reference value in the said counting means in response to the said fields and the said decoding software means consisting of the said central processing unit.

According to a particular embodiment, the counting means include a counting circuit proper for storing some of the bits for coding the program clock reference value and an expansion of complementary capacity, consisting of a memory operated by the central processing unit in response to an interrupt signal generated by the said counter.

Preferably, the said clock reference values being coded over forty-two bits, the counter is a counter with sixteen bits and the expansion is an area of a static random-access memory of complementary capacity.

According to another embodiment, the means for storing the contents of the counting means include a register with memory and an expansion of complementary capacity, consisting of an area of a static random-access memory, for storing the contents of the counting means.

Advantageously, the said program clock reference values being coded over forty-two bits, the latch has a capacity of sixteen bits and the expansion is an area of a static random-access memory of thirty-two bits.

Thus, according to these latter embodiments, the operation of the central processing unit is facilitated and simplified.

The invention will be more clearly understood on reading the following description, given solely by way of example and made with reference to the appended drawings, in which:
- Figure 1 illustrates the structure of a conventional digital television signal;
- Figure 2 is a block diagram of a conventional clock signal generator for synchronizing a reception apparatus, on the basis of clocks of clock reference values transmitted by the signal in Figure 1;
- Figure 3 is a block diagram showing the architecture of a synchronization clock signal generator according to the invention;
- Figure 4 shows an incrementation cycle of a synchronization clock reference counter of the generator in Figure 3; and
- Figure 5 is a block diagram illustrating a cycle for acquisition and processing of a reference clock reference value.

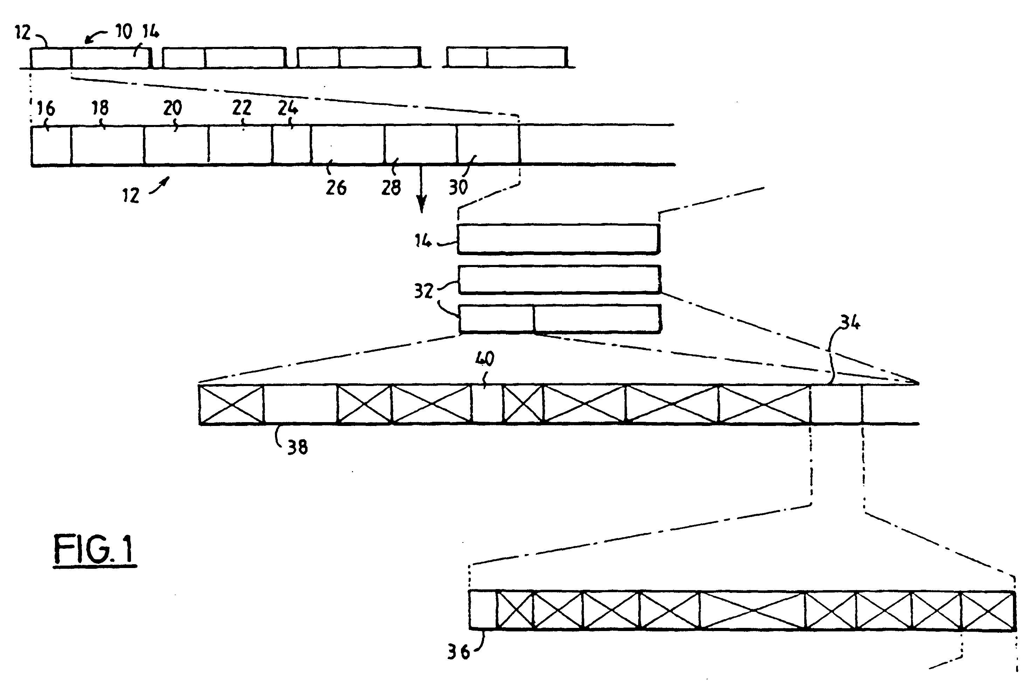

Figure 1 represents the structure of a digital television signal in the MPEG2 format.

This figure represents, enlarged from top to bottom, the various constituent elements of a data packet.

According to the MPEG2 format, the signal consists of a set of digital data packets, for example 10, each including 188 bytes and transmitted by a transmitter apparatus at rates close to 60 Mbits per second in series, and in parallel at rates close to 7.5 Mbits per second.

Each packet 10 consists of a header signal 12, comprising 4 bytes, and a useful digital data signal 14 comprising 184 bytes.

Figure 1 also shows that the header signal 12 includes various useful fields for identifying and decoding the corresponding packet. These fields are as follows:
- a synchronization indicator 16, coded over 8 bits,
- a transport error indicator 18 coded over one bit,
- a start of useful or playload signal indicator 20, coded over one bit,
- a transfer or transport priority indicator 22, coded over one bit,
- a packet identifier 24, coded over thirteen bits,
- a transfer scrambling control indicator 26, coded over two bits,
- an adaptation field control indicator 28, coded over two bits, and
- a continuity counter 30, coded over four bits.

Each header signal 12 provides information relating to the contents of the useful digital data signal 14. Thus, the packet identifier 24 identifies the address of the packet to which it belongs, the packets containing a clock reference value being identified by a unique packet identifier 24.

Thus, in addition, the adaptation field control indicator provides an indication of the contents of the useful signal 14, according to the following coding:
- a value "00" indicates that the corresponding packet should be eliminated,
- a value "01" indicates that, if the start of useful signal indicator 20 is equal to "1", the useful signal starts with a header signal of a data stream PES which indicates that a new image sequence or audio sequence is being transmitted, or otherwise that the useful signal contains a video or audio sequence, and
- a value "1X" indicates that the useful signal contains an adaptation field 32 for the reception apparatus, without providing an indication on the existence of a clock reference value.

According to the latter configuration, in which the adaptation field control indicator 28 is equal to "1X", the adaptation field for the reception apparatus contains, in particular, optional fields 34 for the coding of a synchronization clock reference value 36, hereafter referred to as PCR, coded over forty-two bits, of a discontinuity indicator 38 coded over one bit, indicating that the following PCR value should be used for initializing the generator, and a flag 40, coded over one bit, indicating the presence in the packet of a PCR value, referred to hereafter as a PCR flag.

The other bits in the useful signal 14, not being used in the context of the invention, are represented by a cross and are not explained hereafter.

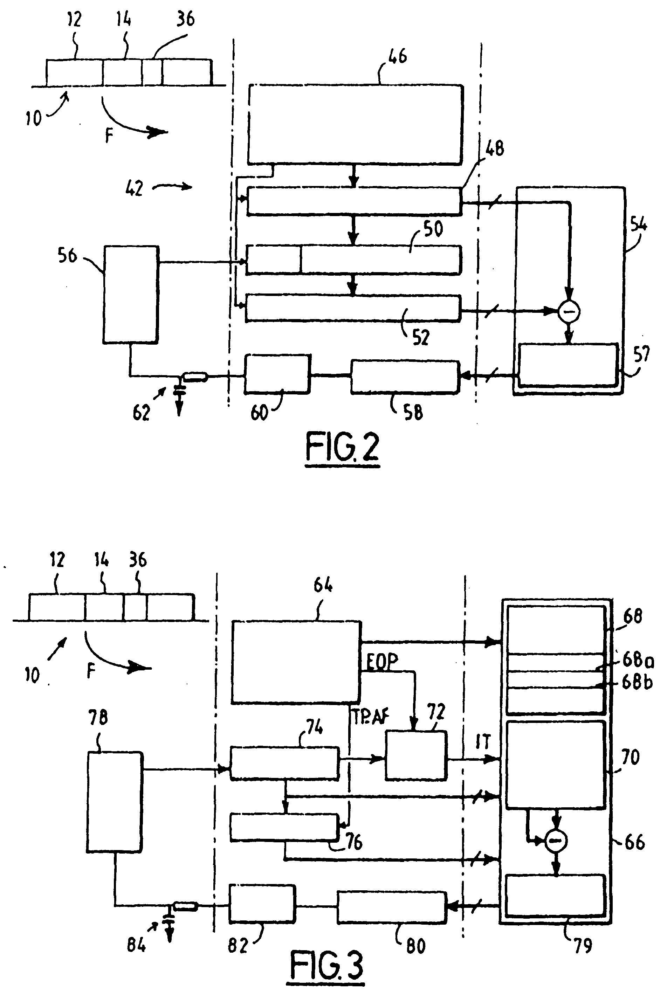

Figure 2 represents the structure of a synchronization clock signal generator of known type, making it possible, on the one hand, to extract a clock reference value PCR from a data packet whose structure has just been described, and, on the other hand, to generate from this value a clock signal for the synchronization of the reception apparatus with a transmitter apparatus.

The clock signal generator 42 receives as input the digital data packets 10, only one of which has been represented in this figure. Hereafter, it will be assumed that this data packet 10 includes an adaptation field 14 in which a PCR value 36 is coded.

The generator 42 includes packet decoding means 46, means 48, with a capacity of forty-two bits, for storing a new PCR, a forty-two bit PCR counter 50, means 52 for storing a current PCR, with a capacity of forty-two bits, a central processing unit 54 and a voltage-controlled oscillator 56. It furthermore includes a digital filter 57, a register 58 intended to contain an analog PCR value, a digital-analog converter 60 of the sigma-delta type, and a low-pass filter 62.

This generator operates as follows.

The decoder 46 receives the packet 10, as represented by the arrow F, and decodes the header signal 12 and the data signal 14. During this decoding, it determines in particular the value of the adaptation field control indicator 28 (Figure 1). When the useful signal 14 contains an adaptation field 32, the decoder 46 stores the value of the discontinuity indicator 38 and the PCR flag 40 in a random-access memory, not represented.

The central processing unit 54 then tests the value of these fields.

If the discontinuity indicator 38 is equal to "1", thus indicating that the following value of the PCR should be used to initialize the generator, the following PCR value 36 is transferred from the means 48 for storing a new PCR to the PCR counter 50.

Furthermore, if the PCR flag is equal to "1", thus indicating that the packet contains a new PCR, the decoder 46 generates a control signal intended for the storage means 48 and 52, so that the new PCR value 36 received can be stored in the means 48 for storing a new PCR and for the contents of the PCR counter 50 to be transferred to the means 52 for storing a current PCR.

The central processing unit 54 reads the values contained in the means 48 for storing a new PCR and in the means 52 for storing a current PCR, and calculates the mean value of these values. This mean value is stored in the register 58, converted into a digital value, filtered then delivered at the input of the voltage-controlled oscillator 56, which then delivers the synchronization clock signal which drives the PCR counter 50.

As mentioned above, this type of synchronization clock signal generator fully decodes the packets and consequently requires high-capacity storage means and complex decoding means.

Furthermore, since the value of the PCR is extracted by means implemented in hardware form, this type of generator is specific to only one application and cannot therefore process data packets present in another format of the MPEG family.

Figure 3 represents a block diagram of a synchronization clock generator according to the invention, making it possible to overcome these drawbacks.

This synchronization clock signal generator includes a circuit 64 for decoding the header signals 12 of the incident packets 10, which is connected to a central processing unit 66 associated with a random-access memory of the static type (SRAM) 68 and with a read-only memory (ROM) 70, to an interrupt logic circuit 72 and to a counting circuit 74 connected to a storage circuit 76, to the interrupt logic circuit 72 and to the central processing unit 66.

The counting circuit 74 is suitable for storing the PCR values 36 transmitted by the packets 10. It has a capacity of sixteen bits and includes a thirty-two bit expansion 68-a arranged in the SRAM memory 68.

It is furthermore incremented on each transition pulse of a voltage-controlled oscillator 78 to which it is connected.

The storage circuit 76 is suitable for storing the contents of the counting circuit 74, as will be explained below. It consists of a register with memory having a capacity of sixteen bits and also includes an expansion 68-b in the SRAM memory 68.

The clock signal generator is supplemented by a digital filter 79 integrated in the central processing unit 66 and connected to a register 80 of the sigma-delta type and to a digital-analog converter 82, also of the sigma-delta type. This converter 82 delivers, via a low-pass filter 84, a control voltage for the voltage-controlled oscillator 78.

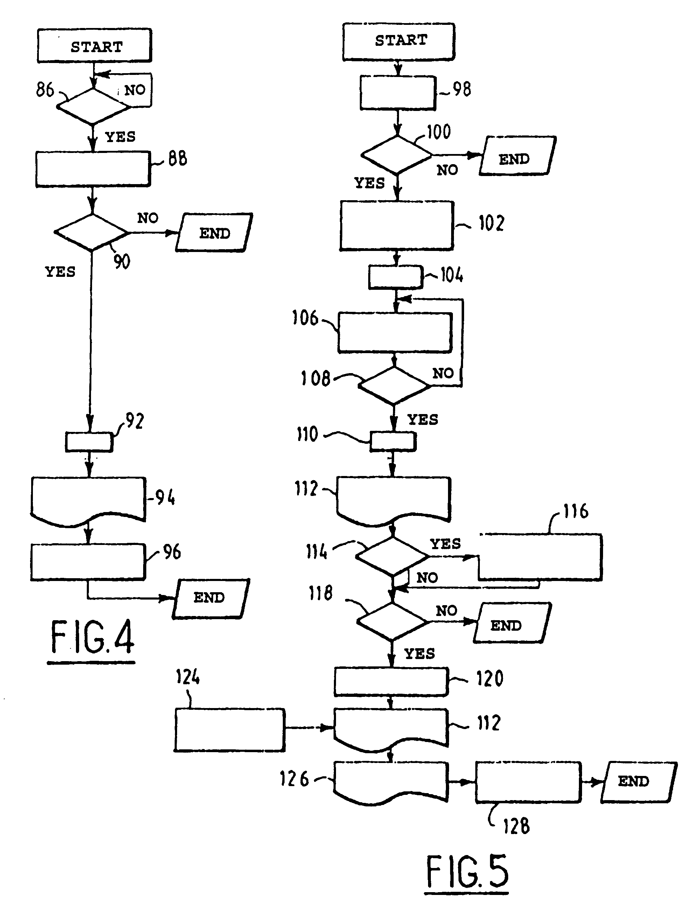

The operation of the synchronization clock signal generator according to the invention will now be described with reference to this Figure 3, as well as to Figures 4 and 5.

Figure 4 represents an increment cycle of a counting circuit 74, performed independently of the cycle for acquiring and processing the PCR value, represented in Figure 5.

The increment cycle starts with a step 86, during which the counting circuit 74 is awaiting a clock pulse from the voltage-controlled oscillator 78.

As soon as such a pulse is presented at the input of this counter 74, the latter is incremented by "1", during step 88.

When the maximum capacity of this sixteen bit counting circuit 74 is reached, it delivers a control signal to the interrupt logic circuit 72 (step 88). When this interrupt circuit 72 has, during a step 90, determined the presence of this control signal, it delivers an interrupt signal IT (step 92) intended for the central processing unit 66.

It should be noted that the previous steps, 86 to 92, are performed by hardware means consisting of a counting circuit 74 and of the interrupt logic circuit 72, the following steps being performed by the central processing unit 66.

When the central processing unit 66 receives the interrupt signal IT from the interrupt circuit 72, it executes during step 94 a known increment subroutine intended for incrementing, in step 96, the expansion 68-a of the counting circuit 74 located in the SRAM 68.

Furthermore, and independently, the clock signal generator executes a PCR value acquisition cycle which will now be described with reference to Figure 5.

First of all, during a first step 98, the decoding circuit 64 receives as input each packet 10, as represented by the arrow F, and decodes the header signal 12 of each incident packet 10. In the rest of the description, it will be assumed that a single packet 10 is received by the clock signal generator, although, in practice, the input signal consists of a set of packets transmitted in series at a frequency of 60 Mbits per second or in parallel at a frequency of 7.5 Mbits per second.

During decoding, the circuit 64 tests in particular the value of the two bits of the adaptation field control indicator 28 so as to determine, during step 100, whether the useful signal 14 contains an adaptation field 32 (Figure 1).

If so, the decoding circuit 64 sets to 1 a control signal "TP_AF" intended for the storage circuit 76 (step 102) so as to transfer the contents of the counting circuit 74 to this storage circuit 76, then sets this control signal TP_AF to zero (step 104).

During the following two steps 106 and 108, all the data of the packet 10 are stored in the SRAM memory 68, then this decoding circuit 64 delivers an end of packet signal EOP to the interrupt logic circuit 72, which then delivers another interrupt signal IT to the central processing unit 66 (step 110).

It should be noted that all the preceding steps 98 to 110 are performed by hardware means consisting of the decoding circuit 64, the counting circuit 74, the storage circuit 76 and the interrupt logic circuit 72, the following steps being performed by software in the central processing unit 66.

In response to the interrupt signal IT, the central unit 66 runs a known subroutine for decoding the adaptation field 32 (step 112).

During the following step 114, it tests the value of the discontinuity indicator 38, which indicates, if it is equal to 1, as mentioned above, that the following PCR value should be used to initialize the generator.

If the value of the discontinuity indicator 38 is equal to "1", the central processing unit 66 sets an initialization flag intended for the counting circuit 74 and for its expansion in the SRAM 68, in order to indicate that the following PCR value 36 will need to be directly stored therein.

Thus, the reception set will be synchronized with a clock frequency corresponding to the PCR value.

In the following step 118, the central processing unit 66 tests whether the value of the PCR flag is equal to "1" and, as mentioned above, signals the presence of a PCR 36 in the useful signal 14.

If this flag is at 1, during step 120 the central processing unit 66 decodes the PCR 36 then calculates, during the following step 122, the current PCR value used for synchronizing the reception apparatus with the transmission apparatus.

In order to perform this calculation, the central processing unit 66 recovers the contents of the storage circuit 76 in which is stored the value of the PCR counting circuit 74 transferred during the decoding of the header signal 12, then calculates a correction corresponding to the number of transitions of the voltage-controlled oscillator 78 between the position of the adaptation field control bits 28 and the position of the last byte of the new PCR value. This correction is added to the contents of the counting circuit 74 and to the expansion in the SRAM memory 68.

During this calculation step 122, another correction is made if the PCR counting circuit 76 has been incremented by the PCR value increment cycle 74. This correction is made by comparing the contents of the counting circuit 74 with the contents of the storage circuit 76.

During the following step 126, the current PCR value calculated is presented as input to the digital filter, which smooths and attenuates the PCR value variations in accordance with the MPEG standard, which sets a maximum variation rate for the reference clock equal to 75 KHz per second.

The filtered value is then stored in the register 80, presented as input of the digital/analog converter 82 and filtered by the lower-pass filter 84 in order to drive the voltage-controlled oscillator 78 (step 128).

In response to this current PCR value, the voltage-control oscillator 78 generates the synchronization clock signals for the receiver apparatus, the frequency of which is between 26 999 460 Hz and 27 000 540 Hz.

It can be seen that the synchronization clock generator which has just been described makes it possible to synchronize a reception apparatus with a transmitter apparatus according to two modes:
- the first mode consists in initializing the generator by synchronizing it substantially periodically with a reference clock whose frequency corresponds to a PCR value, which corresponds to a relatively fast variation in the control clock of the reception apparatus,
- the second mode consists in calculating the current PCR value used by the reception apparatus so as to make it converge to that of the PCR transmitted by the incident signal. According to this second mode, the variation in the synchronization clock signal takes place relatively slowly and therefore does not risk causing data losses.

It can also be seen that, since this generator is partially implemented in the form of software means, it can be used according to different formats of the MPEG standard.

## Claims

1. Generator of clock signals for the synchronization of a system for processing digital data packets (10), each comprising a useful signal (14) and a header signal (12) containing information relating to the contents of the useful signal (14), in a transmitter apparatus, on the basis of program clock reference values (PCR) each transmitted by one of the said packets, comprising counting means (68-a, 74) which are suitable for storing a program clock reference value (PCR) and are incremented under the control of a voltage-controlled oscillator (78), and means (68-b, 76) for storing the contents of the counting means (68-a, 74), **characterized in that** it includes hardware means (64) for decoding the header signal (12) of each packet (10) and which are suitable for extracting from this header signal (12) a characteristic (28) indicating the presence, in the useful signal (14) of the corresponding packet (10), of an adaptation field (32) comprising bits for the coding of the program clock reference value (PCR), so as to cause the transfer of the contents of the counting means (68-a, 74) into the storage means (68-b, 76) and a central processing unit (66) providing for the decoding of the useful signal (14) of each packet (10) so as to decode the said program clock reference value (PCR) and making a correction to the value held in the storage means (68-b, 76) as a function of the number of transitions of the voltage-controlled oscillator (78) between the position of the said characteristic (28) indicating the presence of an adaptation field (32) and the position of the said program clock reference value (PCR) in the useful signal (14), the said central processing unit (66) furthermore providing for the calculation of the said control voltage driving the said voltage-controlled oscillator (78) so as to produce the said synchronization clock signals.

2. Generator of clock signals according to Claim 1, **characterized in that** it furthermore includes software means for decoding the useful signal (14) of each packet (10) so as to extract therefrom a field (40) indicating the presence of a program clock reference value (PCR) in this useful signal and an initialization control field (38), the said central processing unit (66) causing the storage of the program clock reference value (PCR) in the said counting means (68-a, 74) in response to the said fields (38, 40) and the said decoding software means consisting of the said central processing unit (66).

3. Generator of clock signals according to either of Claims 1 or 2, **characterized in that** the counting means (74) include a counting circuit (74) proper for storing some of the bits for coding the program clock reference value (PCR) and an expansion of complementary capacity, consisting of a memory (68) operated by the central processing unit (66) in response to an interrupt signal (IT) generated by the said counter (74).

4. Generator of clock signals according to Claim 3, **characterized in that** the said program clock reference values (PCR) being coded over forty-two bits, the counter (74) is a counter with sixteen bits and the expansion is an area of a static random-access memory (68) of complementary capacity.

5. Generator of clock signals according to any one of Claims 1 to 4, **characterized in that** the means for storing the contents of the counting means include a register with memory (76) and an expansion of complementary capacity, consisting of an area of a static random-access memory (68), for storing the contents of the counting means (68-a, 74).

6. Generator of clock signals according to Claim 5, **characterized in that** the said program clock reference values (PCR) being coded over forty-two bits, the latch (76) has a capacity of sixteen bits and the expansion is an area of a static random-access memory (68) of thirty-two bits.

7. Generator of clock signals according to any one of Claims 1 to 6, **characterized in that** it furthermore includes a digital filter (79) for smoothing the variations of the synchronization clock signal, integrated with the central processing unit (66).

8. Generator of clock signals according to any one of Claims 1 to 7, **characterized in that** the digital data packets are digital packets of a television signal transmitted, serially, at speeds substantially equal to 60 Mbits per second, the said synchronization clock signals having a nominal frequency substantially equal to 27 Mhz.

9. Generator of clock signals according to any one of Claims 1 to 7, **characterized in that** the digital data packets are digital packets of a television signal transmitted, in parallel, at speeds substantially equal to 7.5 Mbits per second, the said synchronization clock signals having a nominal frequency substantially equal to 27 Mhz.

## Patentansprüche

1. Taktsignalgenerator zum Synchronisieren eines Systems zum Verarbeiten digitaler Datenpakete (10), von denen jedes ein Nutzsignal (14) und ein Vorsatzsignal (12) mit Informationen bezüglich des Inhalts des Nutzsignals umfaßt, in einem Sendegerät auf der Basis von Programm-Taktreferenzwerten (PCR), die jeweils durch eines der Pakete gesendet werden, mit Zählmitteln (68-a, 74), die geeignet sind, einen Programm-Taktreferenzwert (PCR) zu speichern und die unter der Steuerung durch einen spannungsgesteuerten Oszillator (78) fortgeschaltet werden, und Mitteln (68-b, 76) zum Speichern des Inhalts der Zählmittel (68-a, 74), **dadurch gekennzeichnet, daß** er Hardware-Mittel (64) zum Decodieren des Vorsatzsignals (12) jedes Pakets (10) enthält, die geeignet sind, aus diesem Vorsatzsignal (12) ein Merkmal (28) zu entnehmen, das im Nutzsignal (14) des entsprechenden Pakets (10) die Anwesenheit eines Anpassungsfeldes (32) mit Bits zum Codieren des Programm-Taktreferenzwerts (PCR) anzeigt, damit die Übertragung des Inhalts der Zählmittel (68-a, 74) in die Speichermittel (68-b, 76) veranlaßt wird, sowie eine Zentraleinheit (66) zum Decodieren des Nutzsignals (14) jedes Pakets (10), so daß der Programm-Taktreferenzwert (PCR) decodiert wird und eine Korrektur des in den Speichermitteln (68-b, 76) enthaltenen Werts in Abhängigkeit von der Anzahl von Übergängen des spannungsgesteuerten Oszillators (78) zwischen der Position des die Anwesenheit eines Anpassungsfeldes (32) anzeigenden Merkmals (28) und der Position des Programm-Taktreferenzwerts (PCR) im Nutzsignal (14) durchgeführt wird, wobei die Zentraleinheit (66) ferner für die Berechnung der Steuerspannung sorgt, die den spannungsgesteuerten Oszillator (78) so ansteuert, daß die Synchronisierungstaktsignale erzeugt werden.

2. Taktsignalgenerator nach Anspruch 1, **dadurch gekennzeichnet, daß** er ferner Softwaremittel zum Decodieren des Nutzsignals (14) jedes Pakets (10) enthält, damit daraus ein Feld (40) entnommen wird, das die Anwesenheit eines Proaramm-Taktreferenzwerts (PCR) in diesem Nutzsignal sowie eines Initialisierungssteuerfeldes (38) anzeigt, wobei die Zentraleinheit (66) das Speichern des Programm-Taktreferenzwerts (PCR) in den Zählmitteln (68-a, 74) abhängig von diesen Feldern (38, 40) veranlaßt und die decodierenden Softwaremittel aus der Zentraleinheit (66) bestehen.

3. Taktsignalgenerator nach Anspruch 1 oder 2, **dadurch gekennzeichnet, daß** die Zählmittel (74) eine eigene Zählschaltung (74) zum Speichern einige der Bits für das Codieren des Programm-Taktreferenzwerts (PCR) sowie eine Erweiterung komplementärer Kapazität enthalten, die aus einem Speicher (68) besteht, der von der Zentraleinheit (66) abhängig von einem Interrupt-Signal (IT), das von dem Zähler (74) erzeugt wird, betätigt wird.

4. Taktsignalgenerator nach Anspruch 3, **dadurch gekennzeichnet, daß** der Programm-Taktreferenzwert (PCR) über 42 Bits codiert ist, wobei der Zähler (74) ein Zähler mit 16 Bits ist und die Erweiterung ein Bereich eines statischen Schreib/Lese-Speichers (68) komplementärer Kapazität ist.

5. Taktsignalgenerator nach einem der Ansprüche 1 bis 4, **dadurch gekennzeichnet, daß** die Mittel zum Speichern des Inhalts der Zählmittel ein Register mit Speicher (76) und eine Erweiterung komplementärer Kapazität enthalten, die aus einem Bereich eines statischen Schreib/Lese-Speichers (68) zum Speichern des Inhalts der Zählmittel (68-a, 74) besteht.

6. Taktsignalgenerator nach Anspruch 5, **dadurch gekennzeichnet, daß** der Programm-Taktreferenzwert (PCR) über 42 Bits codiert ist, wobei das Speicherelement (76) eine Kapazität von 16 Bits hat und die Erweiterung ein Bereich eines statischen Schreib/Lese-Speichers (68) aus 32 Bits ist.

7. Taktsignalgenerator nach einem der Ansprüche 1 bis 6, **dadurch gekennzeichnet, daß** er ferner ein digitales Filter (79) zum Glätten der Schwankungen des Synchronisierungstaktsignals enthält, das in die Zentraleinheit (66) integriert ist.

8. Taktsignalgenerator nach einem der Ansprüche 1 bis 7, **dadurch gekennzeichnet, daß** die digitalen Datenpakete digitale Pakete eines mit Geschwindigkeiten von im wesentlichen gleich 60 MBits pro Sekunde seriell gesendeten Fernsehsignals sind, wobei die Synchronisicrungstaktsignale eine Nennfrequenz von im wesentlichen gleich 27 MHz haben.

9. Taktsignalgenerator nach einem det Ansprüche 1 bis 7, **dadurch gekennzeichnet, daß** die digitalen Datenpakete digitale Pakete eines mit Geschwindigkeiten von im wesentlichen 7,5 MBits pro Sekunde parallel gesendeten Fernsehsignals sind, wobei die Synchronisierungstaktsignale eine Nennfrequenz von im wesentlichen 27 MHz haben.

## Revendications

1. Générateur de signaux d'horloge pour la synchronisation d'un système de traitement de paquets de données numériques (10), comprenant chacun un signal utile (14) et un signal d'en-tête (12) contenant des informations relatives au contenu du signal utile (14), dans un appareil émetteur, sur la base de valeurs de référence d'horloge de programmes (PCR), transmises chacune par un desdits paquets, comprenant des moyens de comptage (68-a, 74) qui sont aptes au stockage d'une valeur de référence de l'horloge de programmes (PCR) et sont incrémentés sous la commande d'un oscillateur (78) à commande de tension, et des moyens (68-b, 76) pour stocker le contenu des moyens de comptage (68a, 74), **caractérisé en ce qu'**il comprend des moyens matériels (64) pour décoder le signal d'en-tête (12) de chaque paquet (10), qui sont aptes à extraire de ce signal d'en-tête (12) une caractéristique (28) indiquant la présence, dans le signal utile (14) du paquet correspondant (10), d'un champ d'adaptation (32) comprenant des bits pour le codage de la valeur de référence d'horloge de programmes (PCR), de manière à provoquer le transfert du contenu des moyens de comptage (68-a, 74) dans les moyens de stockage (68-b, 76) et une unité centrale de traitement (66) effectuant le décodage du signal utile (14) de chaque paquet (10) de manière à décoder la valeur de référence de l'horloge de programmes (PCR) et à apporter à la valeur gardée dans les moyens de stockage (68-b, 76) une correction qui est fonction du nombre de transitions de l'oscillateur à commande de tension (78) entre la position de ladite caractéristique (28) indiquant la présence d'un champ d'adaptation (32) et la position de ladite valeur de référence de l'horloge de programmes (PCR) dans le signal utile (14), ladite unité centrale de traitement (66) effectuant en outre le calcul de ladite tension de commande pilotant ledit oscillateur à commande de tension (78) de manière à former lesdits signaux d'horloge de synchronisation.

2. Générateur de signaux d'horloge selon la revendication 1, **caractérisé en ce qu'**il comprend en outre des moyens logiciels pour décoder le signal utile (14) de chaque paquet (10) de manière à en extraire un champ (40) indiquant la présence d'une valeur de référence de l'horloge de programmes (PCR) dans ce signal utile et un champ de commande d'initialisation (38), ladite unité centrale de traitement (66) provoquant le stockage de la valeur de référence de l'horloge de programmes (PCR) dans lesdits moyens de comptage (68-a, 74) en réponse auxdits champs (38, 40) et lesdits moyens logiciels de décodage étant constitués par ladite unité centrale de traitement (66).

3. Générateur de signaux d'horloge selon l'une ou l'autre des revendications 1 ou 2, **caractérisé en ce** les moyens de comptage (74) comprennent un circuit de comptage (74) apte au stockage de certains des bits de codage de la valeur de référence de l'horloge de programmes (PCR) et une extension de capacité complémentaire, formée par une mémoire (68) commandée par l'unité centrale de traitement (66) en réponse à un signal d'interruption (IT) généré par ledit compteur (74).

4. Générateur de signaux d'horloge selon la revendication 3, **caractérisé en ce que** lesdites valeurs de référence de l'horloge de programmes (PCR) étant codées sur quarante-deux bits, le compteur (74) est un compteur à seize bits et l'extension est une zone d'une mémoire vive statique (68) de capacité complémentaire.

5. Générateur de signaux d'horloge selon l'une quelconque des revendications 1 à 4, **caractérisé en ce que** les moyens de stockage du contenu des moyens de comptage comprennent un registre avec mémoire (76) et une extension de capacité complémentaire, formée par une zone d'une mémoire vive statique (68), pour stocker le contenu des moyens de comptage (68-a, 74).

6. Générateur de signaux d'horloge selon la revendication 5, **caractérisé en ce** lesdites valeurs de référence de l'horloge de programme (PCR) étant codées sur quarante deux bits, la bascule (76) a une capacité de seize bits et l'extension est une zone d'une mémoire vive statique (68) de trente-deux bits.

7. Générateur de signaux d'horloge selon l'une quelconque des revendications 1 à 6, **caractérisé en ce qu'**il comprend en outre un filtre numérique (79) pour lisser les variations du signal d'horloge de synchronisation, intégré à l'unité centrale de traitement (66).

8. Générateur de signaux d'horloge selon l'une quelconque des revendications 1 à 7, **caractérisé en ce que** les paquets de données numériques sont des paquets numériques d'un signal de télévision transmis, en série, à des vitesses sensiblement égales à 60 Mbits par seconde, lesdits signaux d'horloge de synchronisation ayant une fréquence nominale sensiblementégale à 27 MHz.

9. Générateur de signaux d'horloge selon l'une quelconque des revendications 1 à 7, **caractérisé en ce que** les paquets de données numériques sont des paquets numériques d'un signal de télévision transmis, en parallèle, à des vitesses sensiblement égales à 7,5 Mbits par seconde, lesdits signaux d'horloge de synchronisation ayant une fréquence nominale sensiblement égale à 27 MHz.
